# EUROPEAN PATENT APPLICATION

(11) **EP 2 476 601 A1**
(43) Date of publication of application: **18.07.2012**
(21) Application number: 11151306.5
(22) Date of filing: 18.01.2011
(51) Int. Cl.: B62B 1/14

(54) **Flexible barrow**

(71) Applicant: CartMate ApS, 4760 Vordingborg (DK)
(72) Inventor: Jakobsen, Arne, 4760, Vordingborg (DK)
(74) Representative: Holme Patent A/S

(57) **Abstract**

A barrow (1,81,101) of the kind comprising a container (2,82,104), one or more wheels (5,84,106) and one or more handles (3,65,83,111), where at least one or more handles are pivotally attached to the container and the barrow comprises fastening means (18,19,20) to fasten the one or more handles in relation to the container. By releasing the fastening means the one or more handles can be pivoted freely in relation to the container to find another position between the handle and the container. In this way the optimal position of the handle and the container can be found ensuring that a load in the container will be balanced over the wheels so that no carrying force is necessary when moving the barrow and also that the handle always can be in the most ergonomically correct position for the user.

## Description

The present invention relates to a barrow of the kind comprising a container, one or more wheels and one or more handles.

Barrows have been used for a long time. The traditional barrow consists of a container, two handles, one wheel and a leg. Using a traditional barrow and placing a heavy weight in the container means that it will be heavy for the user to carry and move the barrow.

A piece, which is e.g. oblong and is laid down in the container will cause an unbalance in the barrow. Either the weight will be heavy on the handles or the weight will be at the front so that the barrow is about to turn over and the user needs to press the handles down.

When filling a traditional barrow the traditional barrow has to stand on the wheel and the leg. The soil or debris or heavy stone must be lifted over the edge of the container. Such a lift may very well cause injury to the user's back.

If the container is filled with soil or clay or anything sticky it will be difficult to totally empty the container. The soil or clay will stay on the walls of the container.

A gas tube must not fall since that could eventually break off the neck of the tube transforming the tube to a life-threatening rocket. It is therefore essential that the tube is well supported during transport.

A scoop shovel on wheels is disclosed in US 4,302,894, which does not require stooping and bending by the user of the scoop shovel. It does, however, need a great moment around the rear wheel axle to raise the scoop shovel when filled.

The US patent with no. 3,043,033 discloses a wheeled scoop. The scoop consists of a container, two wheels and a handle. The angle between the handle and the container can be adjusted so that the loaded container is more balanced over the wheels than a traditional barrow. But the construction only allows a small change in the angle between the handle and the container. According to the construction the container cannot be anything but small since otherwise the load in the container will cause a large moment around the wheel axis and the container cannot be raised.

Hence, there is a need to provide an alternative more flexible barrow.

In a first aspect according to the present invention is provided a barrow that is easy to empty.

In a second aspect according to the present invention is provided a barrow that is easy to fill.

In a third aspect according to the present invention is provided a barrow arranged for transporting gas tubes in a safe way.

In a fourth aspect according to the present invention is provided a barrow that is well balanced.

In a fifth aspect according to the present invention is provided a barrow that does not need any carrying force when moved.

In the following the rear end of the barrow or container is considered to be the end closest to the user. Accordingly, the front end of the barrow or container is the end furthest from the user and the right end and left end of the barrow or container are the right side and left side of the barrow or container when seen from the user, respectively.

The novel and unique features whereby one or more of the above aspects are achieved according to the present invention consists in that the at least one or more handles are pivotally attached to the container and that the barrow comprises fastening means to fasten the one or more handles in relation to the container.

By releasing the fastening means the one or more handles (from now on designated handle) can be pivoted freely in relation to the container to find another position between the handle and the container. In this way the optimal position of the handle and the container can be found. The optimal position will be where the load in the container and the container are balanced over the wheels so that no carrying force is necessary when moving the barrow and where the handle is in the most ergonomically correct position for the user.

In the present invention the one or more handles are designated handle, however it is to be understood that said handle can comprise several independent handles.

When emptying the container it is of advantage that the fastening means can be released. The barrow is rotated so that the container is more or less vertical and the barrow is balancing on the resting edge. In this position the handle will be more or less vertical. To turn the barrow any further the fastening means is released and the handle rotated down towards the user. The handle is fastened to the container in the new position, where the user has power to further rotate the barrow and turn the barrow upside down.

The fastening means between the handle and the container that can be released gives more control compared to a traditional barrow. When turning a traditional barrow upside down the traditional barrow is raised vertically and pushed over the balance and the barrow is allowed to fall upside down without control. There is a risk that the barrow will break when it falls down. When the barrow is about to be raised again the handle is on the ground, which means an unergonomic movement is needed when the barrow is raised back to the normal position standing on the wheel and the legs of the traditional barrow. That the barrow according to the invention can be turned upside down in a controllable way reduces the risk that the barrow is damaged and that the user will get problems with the user's back.

The barrow can comprise one or more length adjustable legs connected to the container. By adjusting the length of the legs e.g. by unfolding, the barrow according to the invention will be able to stand stably. That the legs can be folded together means that during operation the barrow will be very flexible and be able to rotate more freely around the wheel axis than if the legs were not folded together. With the legs folded together the barrow can be rotated backwards around the axis of the wheel or wheels so that the opening of the container points at the user and the container rests on the ground. In this way the user will be able to easily sweep debris, soil, sand or gravel without having to walk around the barrow to the front end.

In an advantageous embodiment of the present invention the one or more handles can preferably be arranged to pivot more than 90°, more preferably more than 270°, and most preferably pivot more than 360°.

It is important to be able to rotate the handle in relation to the container to such a degree that the barrow can be turned upside down in a controllable way. That means that the rotation can preferably be at least 90°.

It is an advantage to be able to turn the handle around and move the barrow backwards or forward. If the container is formed differently in the front end compared to the rear end the two ends can be used in different situations. The container could have the form of a triangle when seen from above with a peak at the front end and a straight edge at the rear end. Using the barrow with the peak as the front end the barrow will be very suitable to be placed in a corner. Most corners are perpendicular so preferably the peak in the front end is perpendicular. Other angles are also possible depending on the angle of the corner. When filling the container with debris, soil, sand or gravel or something else, the debris, soil, sand or gravel can be thrown onto the walls in the corner above the barrow and the debris, soil, sand or gravel will then fall down in the container. Such a shape of the container will make it easier to fill the container especially from a distance. To be able to use both ends of the container as the front end and at the same time be able to rotate the barrow upside down in both positions, it will be beneficial that the handle can rotate at least 270°.

Even better is to be able to rotate the handle more than one revolution or at least 360°. Then the handle can have any orientation and there will not be any situation where the handle cannot have the ideal orientation in relation to the container. The best option is of course to have no restriction in the number of revolution the handle can make around the container. There will then never be a situation where the handle has to rotated 350° backward instead of 10° forward.

In a preferred embodiment of the invention the fastening means can be arranged to fasten the one or more handles in a multitude of angles in relation to the container, as this ensure a high degree of flexibility and use of the barrow according to the invention.

The barrow can comprise a lever, which is connected to the fastening means and arranged for controlling said fastening means.

The lever can be situated on at least one of the one or more handles. For a convenient use of the barrow it must be easy to release the handle in relation to the container and then also easy to fix the handle in a new angle in relation to the container. Therefore the best position of the lever is to have it on the handle close to the grip of the handle or close to the place of the handle where the user has the hands during operation.

Advantageously, the handle can be fastened in unlimited number of angles in relation to the container.

In another embodiment of the invention the handle and the one or more wheels can have the same pivot axis, as this will ensure an easy and convenient use of the handles.

When the weight of the barrow and the load is balanced on and carried by the wheel or wheels and not at all or very little by the user through the handle, the wheel or wheels have to be placed under the centre of gravity. On an uneven ground a barrow with large wheel or wheels can more easily be pushed. Smaller wheels will more easily get stuck in a pit or behind a stone and make the mobility of the barrow difficult. With one large wheel an indentation in the middle of the container is necessary to give space for the large wheel. It could possibly then be an advantage to instead have two large wheels on each side of the container to avoid the indentation in the container. To be able to rotate the handle one whole revolution it is an advantage that the wheels and the handle pivot around the same axis.

In yet another embodiment of the invention the barrow can comprise braking means arranged for braking the one or more wheels.

Braking means can be very useful when carrying a heavy load down a slope. The brakes can give control over the barrow. Especially when e.g. gas tubes are transported it is very important that the user does not lose control over the barrow and the gas tubes fall and eventually explode.

In a further embodiment of the invention the barrow can comprise at least two wheels and the braking means can be arranged to brake the at least two wheels independently. This provides the possibility to steer the barrow when going down a slope especially with a heavy load in the barrow. If the user wants to turn the barrow to the right the user brakes the right wheel or anyway the right wheel more than the left wheel. If the user wants to turn the barrow to the left the user brakes the left wheel or anyway the left wheel more than the right wheel.

In yet a beneficial embodiment of the invention the container can comprise at least a sidewall, which can have at least one edge that has a shape or profile of an arc.

The container of a traditional barrow has four walls, where the edge of each wall surrounding an opening is straight or non-curved. The result is that the opening is flat - when turning the container upside down on flat ground, the ground and the container creates a volume totally surrounded by the container and the ground.

If two opposing walls and preferably sidewalls - which are parallel to the rotational plane of the handle - of the container have a shape or profile of a convex arc it will be much easier to turn the barrow of the present invention upside down and then back again on the wheels. The curved edge of the two sidewalls means that the barrow when positioned upside down is able to roll to and fro. When rotating the barrow back to resting on the wheels the curved edge or edges will mean a lower moment to overcome since the centre of gravity is higher up for a barrow having a container with curved edge or edges.

In yet a further embodiment of the invention the container can comprise at least a first plane surface and a second plane surface and the first plane surface and the second plane surface can be perpendicular to each other.

To transport e.g. gas tubes the gas tubes must not turn over and must be well supported. With a plane bottom and another plane perpendicular to the plane bottom the gas tubes will be very well supported.

In still another embodiment of the invention the container can have preferably a volume of at least 40 litres, more preferably a volume of at least 50 litres, even more preferably a volume of at least 60 litres and most preferably a volume of at least 70 litres, as this meets the conventional demands of a barrow.

The barrow can be constructed to be able to carry heavy weight and at the same time be manoeuvrable for a person with ordinary or less than ordinary physical strength, even when e.g. a load of several tens of kilograms are placed in the barrow.

The present invention also relates to a barrow of the kind comprising a container and at least one wheel, the at least one wheel has a tread where a part of the tread is in contact with the ground and the container comprises at least one plane surface, where the plane surface defines a first plane that is arranged for being tangential to the part of the tread in contact with the ground or is arranged so that the first plane is at most about 15 cm from the part of the tread.

The defined first plane is to be understood as being an infinite two-dimensional plane.

If the first plane is a tangential to the wheels the plane surface can be placed on an even ground and flush with the surface of the ground. Debris, soil, sand, gravel or similar can then easily be swept into the container and the debris, soil, sand or gravel will stay in the container and not fall out. It is also easy to roll a big stone or other heavy item into the container due to the low inclination and that is not necessary to lift the item. To avoid a situation where a first edge, which is the edge of the plane surface that partly defines the opening of the container, is some centimetres above the ground the first edge can advantageously have a lip bending away from the opening down into the ground when the barrow is resting on the plane surface.

Instead of having a bending lip at the front of the container the rear end of the container can be slightly raised when the first edge at the front rest on the ground. The plane surface will then not rest on the ground but the first edge will rest on the ground and the plane surface will incline somewhat. Any small stone or gravel under the plane surface will not result in the first edge not being able to totally rest on the ground. It will still be possible to easily sweep or shovel debris, soil, sand, gravel or similar into the container and the debris, soil, sand, gravel or similar will not fall out again since the inclination is so small. It is also easy to roll a big stone or other heavy item into the container due to the low inclination and that is not necessary to lift the item.

It shall be understood that the feature that *the plane surface of the container is a tangential plane to the part of the tread in contact with the ground* or the feature that *the first plane is at most about 15 cm from the part of the tread* can be combined with any other feature or combination of features of a barrow described or mentioned in the present patent application.

In an advantageous embodiment of the present invention the first plane preferably is at most about 3 cm from the part of the tread; more preferably the first plane is at most about 6 cm from the part of the tread; even more preferably the first plane is at most about 9 cm from the part of the tread; yet more preferably the first plane is at most about 12 cm and at least 9 cm from the part of the tread; yet even more preferably the first plane is at most about 12 cm and at least about 6 cm from the part of the tread; and most preferably the first plane is at most about 12 cm and at least about 3 cm from the part of the tread. A low inclination of the plane surface means that it is easy to sweep or shovel debris, soil, sand, gravel or similar into the container and keep the debris, soil, sand, gravel or similar in the container. But a somewhat higher inclination is also an advantage since then it is easier to have the front edge to rest totally on the ground. When sweeping debris, soil, sand, gravel or similar into the container no or very little debris, soil, sand, gravel or similar will then be swept or pressed under the front edge.

The present invention also relates to a barrow of the kind comprising a container, one or more wheels and one or more handles, where the barrow has means to fasten the one or more wheels in at least two different positions for each of the one or more wheels. Possibly there are at least three, at least four or at least five different positions for each of the one or more wheels. More positions will give a higher possibility to find the precise position of the wheel or wheels for the particular purpose.

The means to fasten the one or more wheels (from now on designated wheel) to the barrow can be a wheel having an axle, where the axle can easily be removed from a hole in a side of the container or in a rod on the side of the container. The axle and hole can have a snap-on system used for some wheelchairs and prams. By pressing axially on the axle of the wheel the lock system locking the wheel to the hole, is unlocked and the wheel can be taken off. Another possibility is that the rod is a rail and the axle of the wheel can be clamped in or on the rail.

In the present invention the one or more wheels are designated wheel, however it is to be understood that said wheel can comprise several independent wheels.

It shall be understood that the feature *that the barrow has means to fasten the one or more wheels in at least two different positions for each of the one or more wheels* can be combined with any other feature or combination of features of a barrow described or mentioned in the present patent application.

The invention also relates to a method for using the barrow where the method includes the steps of, placing the barrow on the ground resting on the at least one plane surface that is tangential to the one or more wheels, sweeping or shovelling debris, soil, sand or gravel into the container, and raising the barrow so that the barrow stands on the wheel.

When the barrow is placed on an even ground resting on the at least one plane surface that is tangential to the one or more wheels the plane surface will lie directly on the ground having more or less the same normal vector as the ground. That the plane surface is resting directly on the ground means that it is easy to sweep or shovel debris, soil, sand, gravel or similar things into the container. When the container is filled or the heap to be swept or shovelled into the container is in the container, the container is raised to stand on and preferably balance on the one or more wheels.

The method may advantageously further comprise the steps of, rotating the barrow, releasing the fastening means between the one or more handles and the container, rotating the one or more handles in relation to the container, fastening the fastening means between the one or more handles and the container, rotating the barrow further, and emptying the barrow.

It is described how the barrow is emptied by rotating the barrow around the front edge or the rear edge so that the container eventually is upside down. In this position the barrow can be shaken to have the last debris, soil, sand, gravel or similar things out of the container.

The invention will be explained in greater detail below, describing preferred embodiments with reference to the drawings, in which
fig. 1 shows a first embodiment of a barrow according to the invention from the side,
fig. 2 shows the same barrow in a perspective view,
fig. 3 shows a first fastening means between the handle and the container,
figs. 4a and 4b show a second fastening means between the handle and the container,
figs. 5a and 5b show a third fastening means between the handle and the container, where fig. 5b is a cross-section along the line Vb in fig. 5a,
figs. 6a, 6b, 6c and 6d show how the barrow is emptied,
fig. 7 shows a second embodiment of a barrow according to the invention from the side,
fig. 8 shows the same barrow in the same position as in fig. 7 but viewed from behind,
fig. 9 shows the barrow from the side with a container having a plane surface resting on the ground,
fig. 10 shows the barrow with the container resting on a pallet,
fig. 11 shows a third embodiment of a barrow according to the invention from the side,
fig. 12 shows the wheel shown in fig. 11,
fig. 13 shows the same barrow as in fig. 11 when the container rests on the ground, and
fig. 14 shows the same barrow as in fig. 11 when the container is rotated 90°.

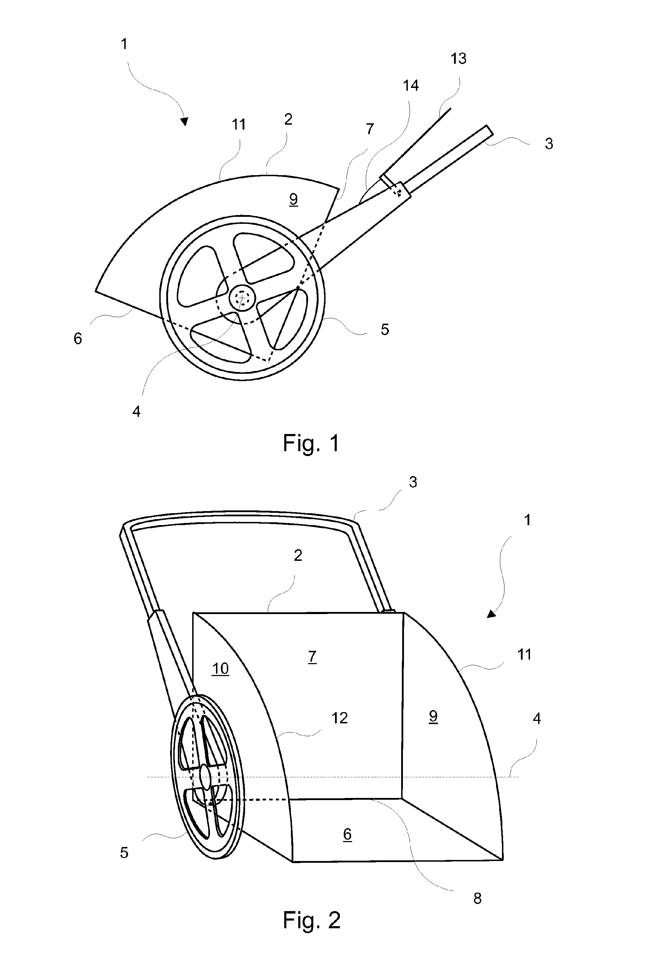

Fig. 1 and 2 illustrate a first embodiment of a barrow 1 according to the present invention. In fig. 1 the barrow 1 is shown from the side while in fig. 2 the barrow is seen in a perspective view. The barrow has a container 2, a handle 3 that is pivotally attached to the container so that the handle can rotate around an axis 4, and two wheels 5. The container comprises a first surface 6 and a second surface 7, which are preferably plane. The first and second surfaces are preferably oriented 90° to each other and form a fold 8 in between. That the angle between the first and second surfaces is perpendicular means that e.g. a gas tube will be able to stand stably on one of the two first and second surfaces and be supported nearly all the way from the bottom to the top of the gas tube by the other one of two first and second surfaces. In fig. 2 the lower part of the handle 3 and one wheel is not seen.

The container 2 comprises also a first sidewall 9 and a second sidewall 10. To enable the handle to be rotated around the container the first sidewall and second sidewall are preferably plane and parallel and are perpendicular to the fold 8 and to the first surfaces 6,7. The first sidewall and second sidewall will then be able to further support the gas tube mentioned above. That a gas tube is well supported during transport is very important, because as mentioned above it is very dangerous if a gas tube falls. A first edge 11 of the first sidewall and a second edge 12 of the second sidewall have the shape of a quarter circle or anyway a rounded shape as seen in fig. 1. The shape of the first and second edge enables the barrow to easily be turned upside down and also easily be turned back again to the position, where the barrow is standing on the wheels.

During transport operation of the barrow, the handle will normally be fixed in relation to the container. To be able to rotate the handle in relation to the container a lever 13 is activated. The lever stretches a wire 14, which loosens the brake between the handle and the container.

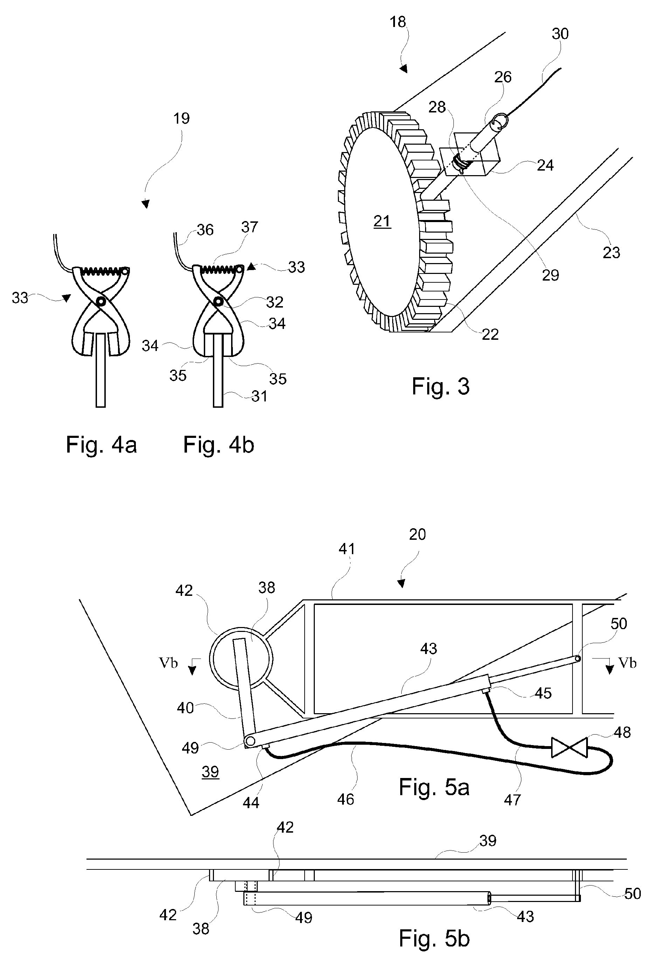

Figures 3, 4a, 4b, 5a and 5b show three different fastening means 18,19,20 between the handle and the container. A first fastening means 18 is shown in fig. 3, where a wheel 21 having many cogs 22 is fixed to the container through an axle (not shown). In fig. 3 a lower part of the handle 23 is seen. On the lower part of the handle 23 a holder 24 is attached. The holder has two holes in which a first pin 26 is movable. The end of the first pin is pressed down between two cogs 22 by a first spring 28 that is compressed between one wall of the holder 24 and a second pin 29 placed through a hole in the first pin 26.

By pulling a first wire 30, the first pin is disengaged from the cogs 22 and the handle can freely rotate and be fastened to the container in another angle by release the first wire and let first pin 26 engage between two other cogs for the new position of the handle in relation to the container. The first fastening means is space saving, enabling the user to change the position of the handle in relation to the container fast. The first fastening means can be made very robust, in order to ensure that heavy load can be transported. For illustrative reasons the holder 24 is placed rather far from the cogs 22 but in practice to make the first fastening means robust the holder 24 is placed very close to the cogs.

Figures 4a and 4b show a second fastening means 19, much resembling the hand brake of a bike. Fig. 4a shows the second fastening means when it is in the released not fastening mode while fig. 4b shows the second fastening means when in the fastening mode. A first disc 31 is fixed to the container through an axle (not shown) while a first axle 32 of the breaking means 33 is fixed to the handle. The breaking means comprises two callipers 34 with braking pads 35. The callipers can pivot around the first axle 32. By pulling the second wire 36 the callipers will be pressed together like a pair of scissors and the braking pads will act on the first disc so that the handle and the container are fastened to each other. It is an advantage that the lever (not shown) pulling the second wire has a lock mechanism so that the lever can stay in the position where the breaking pads are pressed on the first disc and the handle and the container are fastened together. When the lock mechanism is released or when the lever is not pulling the second wire anymore a second spring 37 opens the callipers so that the braking pads no longer press against the disc. The second fastening means enables the user to change the position of the handle in relation to the container very fast and also enables the handle and the container to have any angle between them.

A third fastening means 20 is shown in figs. 5a and 5b. The third fastening means comprises a second disc 38 fixed to the container 39, a rod 40 fixed to the second disc. A frame 41 including a ring 42 can freely rotate around the second disc. A pneumatic or hydraulic cylinder from now on only called cylinder 43 has a first opening 44 and a second opening 45. The first and second openings are connected via two tubes 46,47 and a valve 48. The valve is preferably placed on the handle close to the position where the user will hold the hands. The cylinder is attached by a third axle 49 to the rod 40 and by a fourth axle 50 to the frame 41. When the valve is closed no gas or liquid can move from one end of the cylinder via the first opening to the other end of the cylinder via the second opening or vice versa and the frame which is part of the handle cannot rotate in relation to the container 39. But when the valve is opened gas or liquid can flow between the two ends of the cylinder via the first and the second openings and the handle can be pivoted in relation to the container.

Like the second fastening means, the third fastening means has the advantage that the handle can be fastened at any angle in relation to the container. The third fastening means is also robust and can handle heavy load.

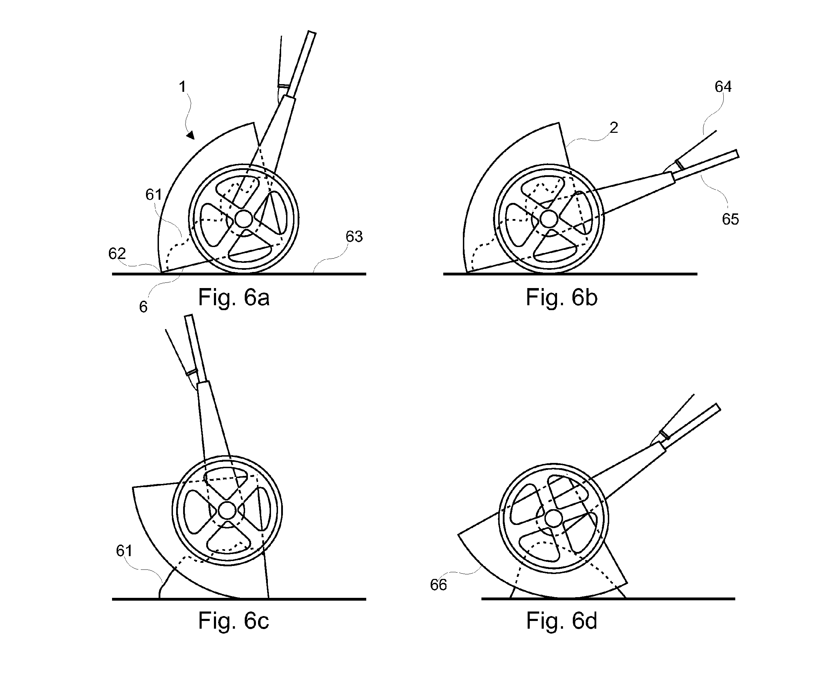

Figures 6a to 6d disclose how the container is emptied when it is filled with mud 61. In fig. 6a the barrow 1 is tilted so that a third edge 62 of the first surface 6 touches the ground 63. In fig. 6b a lever 64 is activated so that a handle 65 can freely rotate in relation to the container 2. The handle is pivoted backwards and downwards so that when the lever is deactivated and the handle is fixed in relation to the container again the whole barrow can be turned nearly upside down as shown in fig. 6c. The lever is activated again and the container rolls over on the first edge 66 and the second edge as in fig. 6d. The barrow can in this position be tilted to and fro but all the time resting on the first edge. To simplify the tilting and to make it easier to turn around the barrow with the opening of the container turning upward the profile of the container seen from the side or the contour of the first edge is that of a quarter circle or close to a quarter circle.

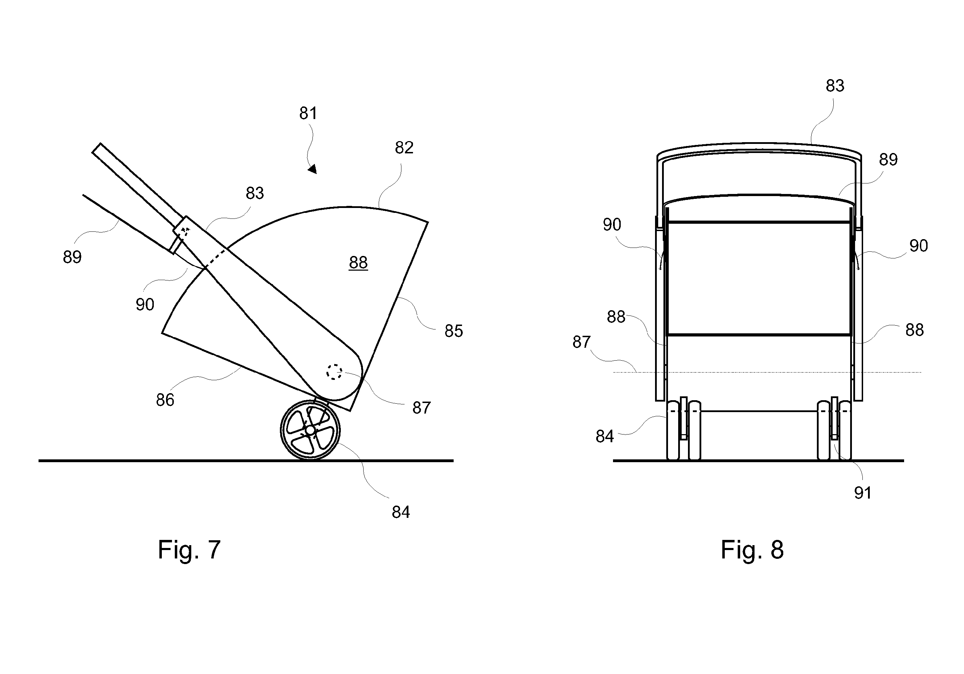

Both figs. 7 and 8 show a barrow 81 in the same position. The barrow comprises a container 82, a handle 83 and four wheels 84. In fig. 7 the barrow is viewed from the side and in fig. 8 from behind. The wheels 84 are positioned so that the tread of the wheels flush with a first plane surface 85 of the container. The barrow, as the barrow in preferably all other figures, is designed so that by changing the angle of the handle in relation to the container the barrow can be pushed with either the first plane surface 85 at the front or with a second plane surface 86 at the front. The handle 83 can be rotated without limitations around the axis 87 since the wheels 84 are all positioned inside sidewalls 88 as seen in fig. 8.

A lever 89 is used via the wire 90 to disengage the fastening means between the handle 83 and the container 82 so that the handle can rotate in relation to the container.

To avoid that wheel holders 91 are bent due to too heavy weight in the container, one wheel is positioned on each side of each wheel holder.

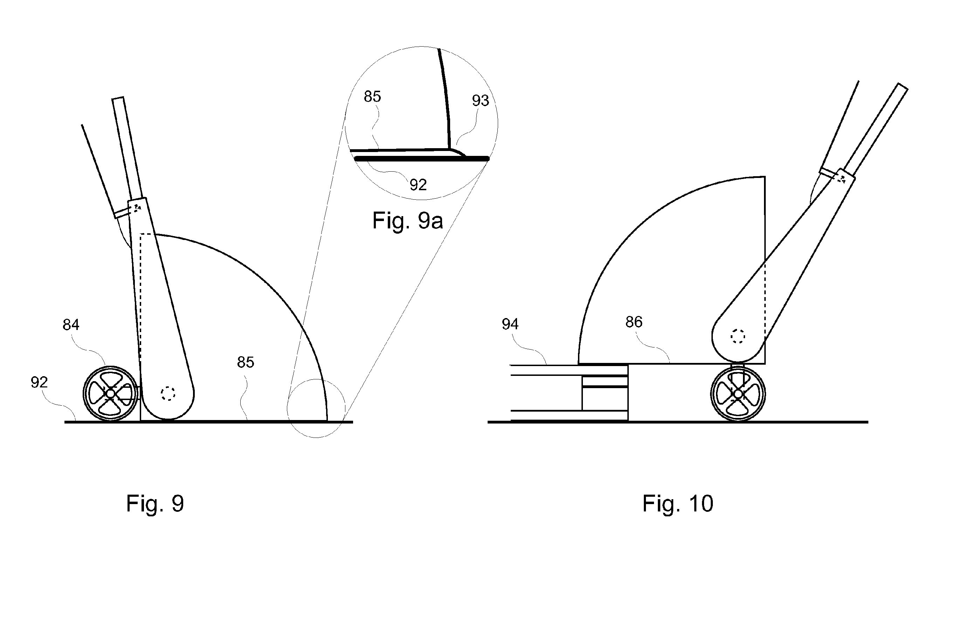

As mentioned above the wheels 84 are positioned so that the treads of the wheels flush with the first plane surface 85 of the container. This is clearly seen in fig. 9, where the first plane surface is resting on the ground 92. In this position it is very easy to sweep or shovel debris, soil, sand or gravel into the container.

Fig. 9a is a magnification of the circle at the front edge of the container in fig. 9. In fig. 9a a curved lip 93 finish the first plane surface 85 of the container. The curved lip will rest on the ground even though a small stone is between the first plane surface 85 and the ground 92 enabling easy sweeping or shovelling of debris, soil, sand or gravel into the container.

If the size of the wheel corresponds to the height of a pallet 94 it will be easy to move things between the container and the pallet as seen in fig. 10. In this situation the barrow is wheeled with the second plane surface 86 at the front.

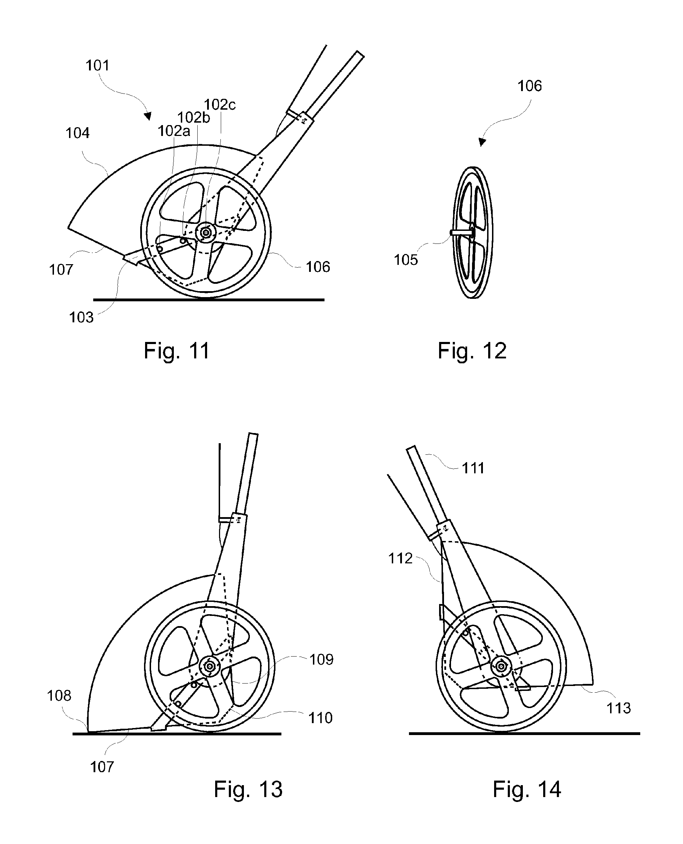

Fig. 11 discloses a similar barrow 101 as the barrow disclosed in Fig. 1. The difference between the two barrows are that the barrow 101 has three holes 102a,102b,102c in a rod 103 on the side of a container 104. An axle 105 on a wheel 106 viewed in fig. 12 fits the holes. The axle has some sort of attachment means (not shown) so that the axle will stay in the whole as long as the attachment means is released. In fig. 11 the axle is placed in the upper hole 102c on the container and a bottom surface 107 of the container is consequently close to the ground as shown in fig. 13. The low position of the container 104 means that when a front edge 108 of the bottom surface is resting on the ground the bottom surface has only a marginal slope. The bottom surface is nearly horizontal and it is easy to sweep or shovel debris, soil, sand or gravel into the container. It is also easy to roll a big stone or other heavy item into the container due to the low inclination and that is not necessary to lift the item. Since the bottom surface has a small inclination and is not wholly resting on the ground the ground does not necessarily need to be free from small stones or gravel for the front edge to rest fully on the ground. The position of the container means that the container is close to the ground and there is a risk that bottom surface 107 could bounce into a small elevation in the ground. For that reason the edge between the bottom surface and a rear side surface 109 is cut off and replaced by a angled surface 110 approximately 45° to bottom surface 107 and the rear side surface 109.

In fig. 14 the container and a handle 111 are rotated from the position shown in fig. 13 so that the bottom surface is a new rear side surface 112 and the rear side surface is a new bottom surface 113. In this position the container will be in an elevated position with little risk that the container will bounce into a stone.

The barrow according to the invention has a simple and inexpensive design, and can therefore be used equally well for both private and industrial facilities where known barrows valve are too troublesome and complicated to use.

Modifications and combinations of the above principles and designs are foreseen within the scope of the present invention.

## Claims

1. A barrow (1,81,101) of the kind comprising a container (2, 82, 104), one or more wheels (5,84,106) and one or more handles (3,65,83,111), **characterised in that** the one or more handles (3,65,83,111) are pivotally attached to the container (2,82,104) and the barrow (1,81,101) comprises fastening means (18,19,20) arranged to fasten the one or more handles in relation to the container.

2. A barrow (1,81,101) according to claim 1, **characterised in that** the one or more handles (3,65,83,111) are arranged to preferably pivot more than 270°, more preferably more than 300°, even more preferably more than 330° and most preferably pivot more than 360°.

3. A barrow (1,81,101) according to claim 1 or 2, **characterised in that** the fastening means (18,19,20) is arranged to fasten the one or more handles (3,65,83,111) in a multitude of angles in relation to the container (2, 82, 104).

4. A barrow (1,81,101) according to any of the preceding claims 1 - 3, **characterised in that** the one or more handles (3,65,83,111) and the one or more wheels (5,84,106) have the same pivot axis (4).

5. A barrow (1,81,101) according to any of the preceding claims 1 - 4, **characterised in that** the barrow (1,81,101) comprises braking means arranged for braking the one or more wheels (5, 84, 106) .

6. A barrow (1,81,101) according to claim 5, **characterised in that** the barrow (1,81,101) comprises more than one wheel (5,84,106) and that the braking means is arranged to brake each wheel independently.

7. A barrow (1,81,101) according to any of the preceding claims 1 - 6, **characterised in that** the container (2,82,104) comprises at least a sidewall (9,10,88) which has at least one edge that has a shape or profile of an arc.

8. A barrow (1,81,101) according to any of the preceding claims 1 - 7, **characterised in that** the container (2,82,104) comprises at least a first plane surface (6, 85, 107) and a second plane surface (7, 86, 109) and the first plane surface and the second plane surface are perpendicular to each other.

9. A barrow (1,81,101) according to any of the preceding claims 1 - 8, **characterised in that** the container (2,82,104) preferably has a volume of at least 40 litres, more preferably a volume of at least 50 litres, even more preferably a volume of at least 60 litres, and most preferably a volume of at least 70 litres.

10. A barrow (1,81,101) of the kind comprising a container (2,82,104), one or more handles (3, 65, 83, 111) and at least one wheel (5,84,106), the at least one wheel (5,84,106) has a tread where a part of the tread is in contact with the ground and the container (2,82,104) comprises at least one plane surface, **characterised in that** the plane surface (85) defines a first plane that is arranged for being tangential to the part of the tread in contact with the ground or is arranged so that the first plane is at most about 15 cm from the part of the tread.

11. A barrow (1,81,101) according to claim 10, **characterised in that** the first plane preferably is at most about 3 cm from the part of the tread; more preferably the first plane is at most about 6 cm from the part of the tread; even more preferably the first plane is at most about 9 cm from the part of the tread; yet more preferably the first plane is at most about 12 cm and at least 9 cm from the part of the tread; yet even more preferably the first plane is at most about 12 cm and at least about 6 cm from the part of the tread; and most preferably the first plane is at most about 12 cm and at least about 3 cm from the part of the tread.

12. A barrow (1,81,101) of the kind comprising a container (2,82,104), one or more wheels (5,84,106) and one or more handles (3,65,83,111), **characterised in that** the barrow (1,81,101) has means to fasten the one or more wheels (5,84,106) in at least two different positions for each of the one or more wheels.

13. A method for using the barrow (1,81,101) according to claims 1 - 12 **characterised in that** the method includes the steps of
- placing the barrow (1,81,101) on the ground (63,92) resting on at least one plane surface (85) that is tangential to the one or more wheels (5,84,106),
- sweeping or shovelling debris, soil, sand or gravel into the container (2,82,104), and
- raising the barrow (1,81,101) so that the barrow stands on the one or more wheels (5,84,106).

14. A method according to claim 13 **characterised in that** the method also comprises the steps of
- rotating the barrow (1,81,101),
- releasing the fastening means (18,19,20) between the one or more handles (3,65,83,111) and the container (2,82,104),
- rotating the one or more handles in relation to the container,
- fastening the fastening means between the one or more handles and the container,
- rotating the barrow further, and
- emptying the barrow.

15. Use of the barrow (1,81,101) according to any of the claims 1 - 10 for providing easy emptying of the container (2, 82, 104).
